# EUROPEAN PATENT APPLICATION

(11) **EP 4 714 830 A1**
(43) Date of publication of application: **25.03.2026**
(21) Application number: 25203443.4
(22) Date of filing: 19.09.2025
(51) Int. Cl.: B64D 33/00, F01D 25/18, F01D 25/24, F01D 25/28, F02C 7/06, F02C 7/32, F16B 5/02, F16N 19/00

(54) **MOUNTING ASSEMBLY FOR CONNECTING AIRCRAFT COMPONENTS TOGETHER**

(30) Priority: 19.09.2024 US 202418890327
(71) Applicant: PRATT & WHITNEY CANADA CORP., Longueuil, Québec J4G 1A1 (CA)
(72) Inventor: DANIEL, Marion, (01BE5) Longueuil, J4G 1A1 (CA); MARLEAU-FINLEY, Julien, (01BE5) Longueuil, J4G 1A1 (CA)
(74) Representative: Dehns

(57) **Abstract**

An assembly is provided for an aircraft. This aircraft assembly includes a first mount (28), a second mount (30), a mounting assembly (20) and a fluid reservoir structure. The mounting assembly (20) connects the first mount (28) to the second mount (30) along an axis (26) while providing controlled intercomponent movement between the first mount (28) and the second mount (30) to reduce internal stress and/or wear. The mounting assembly (20) includes an outer bushing (32), an inner bushing (34) and a fastener (36). The fluid reservoir structure includes one of the first mount (28) or the second mount (30).

## Description

### TECHNICAL FIELD

This disclosure relates generally to an aircraft and, more particularly, to mounting aircraft components together.

### BACKGROUND INFORMATION

Various mounting assemblies are known in the art for connecting aircraft components together. While these known mounting assemblies have various benefits, there is still room in the art for improvement.

### SUMMARY

According to an aspect of the present disclosure, an assembly is provided for an aircraft. This aircraft assembly includes a first mount, a second mount, a mounting assembly and a fluid reservoir structure. The first mount includes a first mount aperture. The second mount includes a second mount aperture. The mounting assembly connects the first mount to the second mount along an axis while providing controlled intercomponent movement between the first mount and the second mount to reduce internal stress and/or wear. The mounting assembly includes an outer bushing, an inner bushing and a fastener. The outer bushing includes an outer bushing bore. The outer bushing projects partially axially into the first mount aperture. The outer bushing is radially next to the first mount. The inner bushing includes an inner bushing bore, an inner bushing base and an inner bushing rim that projects radially out from the inner bushing base. The inner bushing base projects axially through the outer bushing bore to axially engage the second mount. The inner bushing base is radially between and next to the fastener and the outer bushing. The inner bushing rim is axially next to the first mount with the first mount axially between the inner bushing rim and the second mount. The fastener projects axially through the second mount aperture and the inner bushing bore. The fluid reservoir structure includes one of the first mount or the second mount.

According to another aspect of the present disclosure, an aircraft assembly is provided for controlled intercomponent movement to reduce internal stress and/or wear. This aircraft assembly includes a first mount, a second mount, an outer bushing, an inner bushing, a fastener, a washer and a nut. The first mount includes a first mount aperture that extends axially along an axis through the first mount. The second mount includes a second mount aperture that extends axially along the axis through the second mount. The outer bushing includes an outer bushing bore. The outer bushing is pressed into the first mount aperture. The inner bushing includes an inner bushing bore, an inner bushing base and an inner bushing rim that projects radially out from the inner bushing base. The inner bushing base projects axially along the axis through the outer bushing bore. The inner bushing rim is axially next to the first mount with the first mount axially between the inner bushing rim and the second mount. The fastener includes a head and a shank projecting axially along the axis out from the head and sequentially through the second mount aperture and the inner bushing bore to a distal end of the fastener. The washer is mounted on the shank. The nut is threaded onto the shank to clamp the washer, the inner bushing and the second mount in a stack between the nut and the head.

According to still another aspect of the present disclosure, another aircraft assembly is provided for controlled intercomponent movement to reduce internal stress and/or wear. This aircraft assembly includes a shoulder bolt, an inner bushing, an outer bushing, a nut and a washer. The shoulder bolt includes a head, a threaded section and a shoulder section extending axially along an axis from the head to the threaded section. The inner bushing includes an inner bushing base and an inner bushing rim that projects radially out from the inner bushing base. The inner bushing base is mounted on the shoulder section. The inner bushing base extends axially along the axis from an inner bushing first end to an inner bushing second end. The inner bushing second end is located closer axially to the head than the inner bushing first end. The inner bushing rim is disposed at the inner bushing first end. The outer bushing includes an outer bushing base and an outer bushing rim that projects radially out from the outer bushing base. The outer bushing base is mounted on the inner bushing base. The outer bushing base extends axially along the axis from an outer bushing first end to an outer bushing second end. The outer bushing first end is located closer axially to the inner bushing rim than the outer bushing second end. The outer bushing second end is axially recessed along the inner bushing base from the inner bushing second end. The outer bushing rim is disposed at the outer bushing second end. The nut is threaded on the threaded section. The washer is mounted on the shoulder bolt. The washer is axially between and contacts the nut and the inner bushing.

The following optional features may be applied to any of the above aspects.

The inner bushing may extend axially along the axis from an inner bushing first end to an inner bushing second end. The inner bushing rim may be located at the inner bushing first end. An axial distance from the inner bushing rim to the inner bushing second end may be larger than an axial thickness of the outer bushing.

The shank may include a threaded section and a shoulder section connected axially between the threaded section and the head. The second mount and the inner bushing may be mounted on the shoulder section. The nut may be threaded onto the threaded section. An axial length of the shoulder section may be smaller than a sum of an axial thickness of the second mount and an axial thickness of the inner bushing.

The aircraft assembly may also include a fluid reservoir structure. The fluid reservoir structure may include the first mount (or the second mount).

The aircraft assembly may also include a housing structure for an aircraft engine. The housing structure may include the second mount (or the first mount).

The second mount may be axially between and contact the inner bushing base and a head of the fastener.

The second mount may be clamped axially between the inner bushing base and a head of the fastener.

The outer bushing may also include an outer bushing base and an outer bushing rim that projects radially out from the outer bushing base. The outer bushing base may project partially axially into the first mount aperture towards the inner bushing rim. The outer bushing rim may be axially next to the first mount and the second mount.

The outer bushing rim may contact the first mount and may be axially spaced from the second mount.

The outer bushing base may be fixed to the first mount through a radial interference fit.

A loose fit interface may be formed radially between the inner bushing base and the outer bushing base.

A tight fit interface may be formed radially between the inner bushing base and the outer bushing base.

The fastener may include a head and a shank. The shank may project axially out from the head and sequentially through the second mount aperture and the inner bushing bore.

The shank may be radially next to the second mount.

The shank may include a threaded section and a shoulder section projecting axially through the second mount aperture and the inner bushing bore from the head to the threaded section. The mounting assembly may also include a nut threaded onto the threaded section with the inner bushing clamped axially between the nut and the first mount.

The mounting assembly may also include a washer clamped axially between the nut and the inner bushing.

The washer may be axially spaced from an axial end of the shoulder section by an air gap.

The washer may have a uniform axial thickness extending radially from an inner side of the washer to an outer side of the washer.

The assembly may also include a housing structure for an aircraft engine. The housing structure may include the other one of the first mount or the second mount.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a sectional illustration of a mounting assembly connecting a tank mount to a case mount.
FIG. 2 is a sectional illustration of inner and outer bushings arranged with the tank mount.
FIG. 3 is a sectional illustration of a fastener.
FIG. 4 is a partial sectional illustration of a washer.
FIGS. 5 and 6 are sectional illustrations of the tank mount and the case mount connected together with various alternative mounting assembly arrangements.

### DETAILED DESCRIPTION

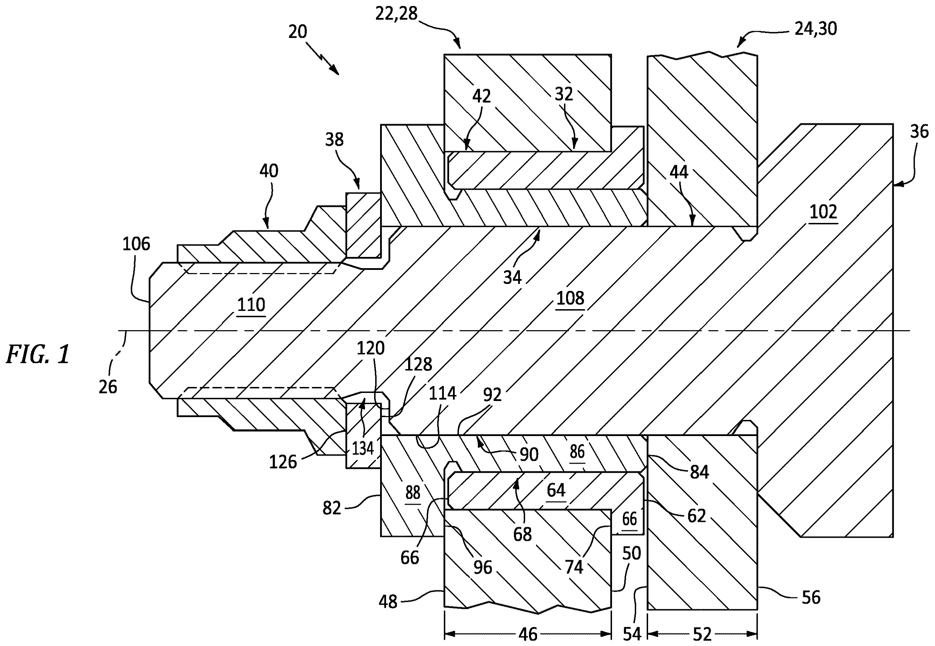

FIG. 1 illustrates a mounting assembly 20 for a powerplant of an aircraft. The aircraft may be an airplane, a helicopter, a drone (e.g., an unmanned aerial vehicle (UAV)) or any other manned or unmanned aerial vehicle or system. The aircraft powerplant may be configured as, or otherwise included as part of, a propulsion system for the aircraft. The aircraft powerplant, for example, may be a turbofan engine, a turbojet engine, a turboprop engine, a turboshaft engine, a rotary engine (e.g., a Wankel engine), a reciprocating piston engine, or any other type of combustion engine configured to generate thrust and/or drive rotation of a ducted or open propulsor rotor configured to generate thrust. The aircraft powerplant may alternatively (or also) be configured as, or otherwise included as part of, a power generation system for the aircraft. The aircraft powerplant, for example, may be an auxiliary power unit (APU) or any other type of combustion engine configured to mechanically power operation of an electrical generator. The present disclosure, however, is not limited to such exemplary combustion engine powerplants. The combustion engine of the aircraft powerplant, for example, may be replaced by or may be paired with an electric machine and/or any other type of power unit. Moreover, it is contemplated the mounting assembly 20 of the present disclosure may be utilized for non-aircraft powerplant applications.

The mounting assembly 20 of FIG. 1 is configured to connect a first component 22 of the aircraft powerplant to a second component 24 of the aircraft powerplant along an axis 26. For ease of description, the first component 22 is described below as a fluid reservoir structure such as a lubricant tank with a tank mount 28; e.g., a mounting flange. Also for ease of description, the second component 24 is described below as a housing structure for the power unit (e.g., combustion engine, electric machine, etc.) such as a casing with a case mount 30; e.g., a mounting flange. It is contemplated, however, the mounting assembly 20 may alternatively connect together various other components of the aircraft powerplant and, more generally, various other components of the aircraft. The mounting assembly 20 of FIG. 1 includes an assembly outer bushing 32, an assembly inner bushing 34, an assembly fastener 36, an assembly washer 38 and an assembly nut 40. The axis 26 may be a centerline axis of the mounting assembly 20. More particularly, the axis 26 may be a centerline axis of one or more or all of the mounting assembly members 32, 34, 36, 38 and 40. The axis 26 may also be a centerline axis of an aperture 42 in the tank mount 28 and/or an aperture 44 in the case mount 30.

The tank mount 28 has an axial thickness 46 that extends axially along the axis 26 from an axial first side 48 of the tank mount 28 to an axial second side 50 of the tank mount 28, where the tank mount second side 50 is arranged axially opposite the tank mount first side 48 along the axis 26. The tank mount aperture 42 is configured as a through-hole in the tank mount 28. More particularly, the tank mount aperture 42 extends axially along the axis 26 through the tank mount 28 between the opposing axial tank mount sides 48 and 50. This tank mount aperture 42 may have a circular cross-sectional geometry when viewed, for example, in a reference plane perpendicular to the axis 26.

The case mount 30 has an axial thickness 52 that extends axially along the axis 26 from an axial first side 54 of the case mount 30 to an axial second side 56 of the case mount 30, where the case mount second side 56 is arranged axially opposite the case mount first side 54 along the axis 26. The case mount aperture 44 is configured as a through-hole in the case mount 30. More particularly, the case mount aperture 44 extends axially along the axis 26 through the case mount 30 between the opposing axial case mount sides 54 and 56. This case mount aperture 44 may have a circular cross-sectional geometry when viewed, for example, in the reference plane.

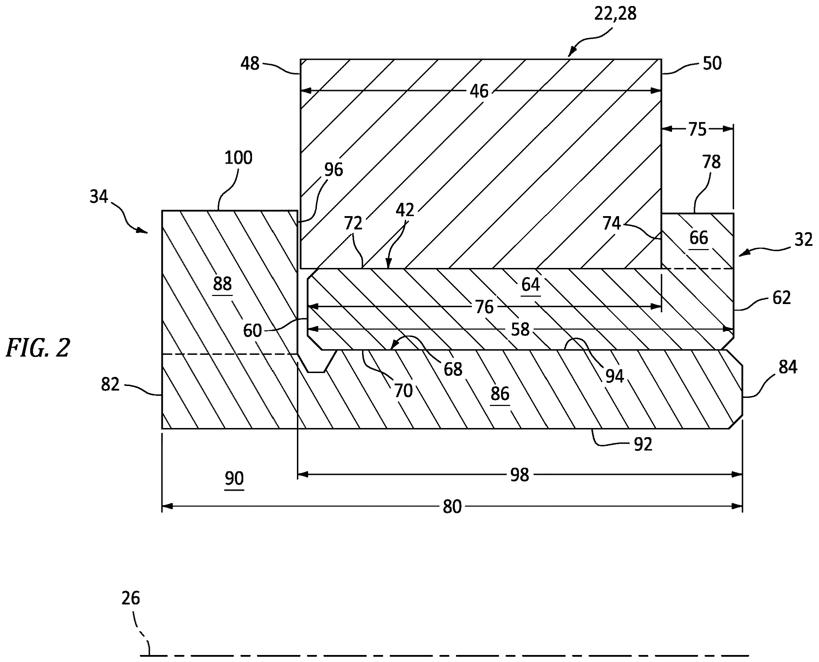

Referring to FIG. 2, the assembly outer bushing 32 has an axial thickness 58 that extends axially along the axis 26 from an axial first end 60 of the assembly outer bushing 32 to an axial second end 62 of the assembly outer bushing 32, where the outer bushing second end 62 is arranged axially opposite the outer bushing first end 60 along the axis 26. The assembly outer bushing 32 of FIG. 2 includes an outer bushing base 64, an outer bushing rim 66 and an outer bushing bore 68.

The outer bushing base 64 extends axially along the axis 26 from the outer bushing first end 60 to the outer bushing second end 62. The outer bushing base 64 extends radially between a radial inner side 70 of the assembly outer bushing 32 and its outer bushing base 64 to a radial outer side 72 of the outer bushing base 64. The outer bushing base 64 extends circumferentially about (e.g., completely around) the axis 26, providing the outer bushing base 64 with a full-hoop (e.g., tubular) geometry. With this arrangement, the outer bushing inner side 70 forms a radial outer peripheral boundary of the outer bushing bore 68 as the outer bushing bore 68 extends axially along the axis 26 through the assembly outer bushing 32 and its outer bushing base 64. This outer bushing bore 68 may have a circular cross-sectional geometry when viewed, for example, in the reference plane.

The outer bushing rim 66 is connected to (e.g., formed integral with or otherwise attached to) the outer bushing base 64 at the outer bushing second end 62. The outer bushing rim 66 of FIG. 2, for example, extends axially along the axis 26 and the outer bushing base 64 from an axial first end 74 of the outer bushing rim 66 to the outer bushing second end 62. The outer bushing rim 66 has an axial thickness 75 that extends from the outer bushing rim first end 74 to the outer bushing second end 62. The outer bushing rim first end 74 is axially recessed from the outer bushing first end 60 by an axial distance 76 which is sized less than the tank mount thickness 46. The outer bushing rim 66 projects radially out from the outer bushing base 64 to a radial outer distal side 78 of the outer bushing rim 66. The outer bushing rim 66 extends circumferentially about (e.g., completely around) the axis 26, providing the outer bushing rim 66 with a full-hoop (e.g., annular) geometry.

The assembly inner bushing 34 has an axial thickness 80 that extends axially along the axis 26 from an axial first end 82 of the assembly inner bushing 34 to an axial second end 84 of the assembly inner bushing 34, where the inner bushing second end 84 is arranged axially opposite the inner bushing first end 82 along the axis 26. The assembly inner bushing 34 of FIG. 2 includes an inner bushing base 86, an inner bushing rim 88 and an inner bushing bore 90.

The inner bushing base 86 extends axially along the axis 26 from the inner bushing first end 82 to the inner bushing second end 84. The inner bushing base 86 extends radially between a radial inner side 92 of the assembly inner bushing 34 and its inner bushing base 86 to a radial outer side 94 of the inner bushing base 86. The inner bushing base 86 extends circumferentially about (e.g., completely around) the axis 26, providing the inner bushing base 86 with a full-hoop (e.g., tubular) geometry. With this arrangement, the inner bushing inner side 92 forms a radial outer peripheral boundary of the inner bushing bore 90 as the inner bushing bore 90 extends axially along the axis 26 through the assembly inner bushing 34 and its inner bushing base 86. This inner bushing bore 90 may have a circular cross-sectional geometry when viewed, for example, in the reference plane.

The inner bushing rim 88 is connected to (e.g., formed integral with or otherwise attached to) the inner bushing base 86 at the inner bushing first end 82. The inner bushing rim 88 of FIG. 2, for example, extends axially along the axis 26 and the inner bushing base 86 from the inner bushing first end 82 to an axial second end 96 of the inner bushing rim 88. The inner bushing rim second end 96 is axially recessed from the inner bushing second end 84 by an axial distance 98 which is sized larger than the outer bushing thickness 58. This axial distance 98 is also sized larger than a sum of the tank mount thickness 46 and the outer bushing rim thickness 75. The inner bushing rim 88 projects radially out from the inner bushing base 86 to a radial outer distal side 100 of the inner bushing rim 88. The inner bushing rim 88 extends circumferentially about (e.g., completely around) the axis 26, providing the inner bushing rim 88 with a full-hoop (e.g., annular) geometry.

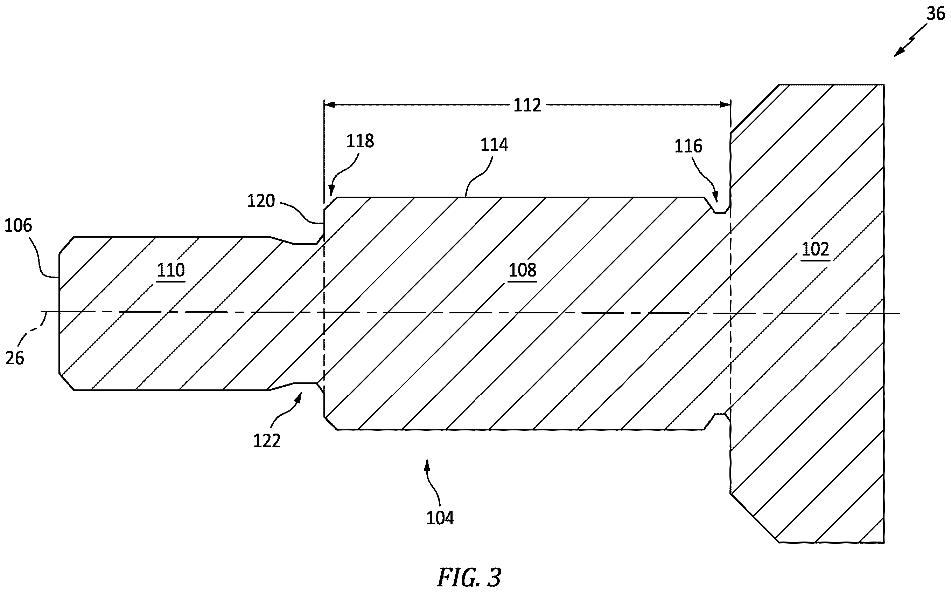

Referring to FIG. 3, the assembly fastener 36 may be configured as a shoulder bolt. The assembly fastener 36 of FIG. 3, for example, includes a fastener head 102 and a fastener shank 104 that projects axially along the axis 26 out from the fastener head 102 to an axial distal end 106 of the assembly fastener 36 and its fastener shank 104. The fastener shank 104 of FIG. 3 includes an axial shoulder section 108 and an axial threaded section 110.

The shoulder section 108 is axially between and connected to (e.g., formed integral with or otherwise attached to) the fastener head 102 and the threaded section 110. The shoulder section 108 has an axial length 112 that extends axially along the axis 26 from the fastener head 102 to the threaded section 110. This shoulder section length 112 is sized smaller than a sum of the case mount thickness 52 (see FIG. 2) and the inner bushing thickness 80 (see FIG. 2). The shoulder section 108 projects axially out from the axis 26 to a radial outer surface 114 (e.g., a cylindrical surface) of the shoulder section 108. An axial length of this shoulder section outer surface 114 may be (e.g., slightly) smaller than the shoulder section length 112. For example, the shoulder section 108 may include a groove 116 between the shoulder section outer surface 114 and the fastener head 102. The shoulder section 108 may also or alternatively include a chamfered corner 118 at a distal axial end 120 of the shoulder section 108. The shoulder section axial end 120 of FIG. 3 is formed by an annular surface which is perpendicular to the axis 26.

The threaded section 110 projects axially out from the shoulder section axial end 120 to the fastener distal end 106. At least a majority (e.g., 70%, 80%, 90% or more) of a radial outer periphery of the threaded section 110 is cut with threads. However, the threaded section 110 may also include a groove 122 axially between the threads and the shoulder section axial end 120 to facilitate the cutting of the threads.

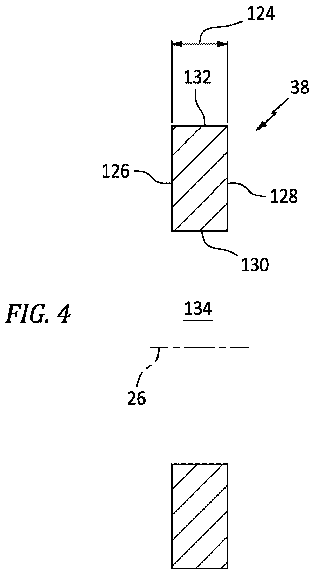

Referring to FIG. 4, the assembly washer 38 has an axial thickness 124 that extends axially along the axis 26 from an axial first end 126 of the assembly washer 38 to an axial second end 128 of the assembly washer 38, where the washer second end 128 is arranged axially opposite the washer first end 126 along the axis 26. The assembly washer 38 extends radially from a radial inner side 130 of the assembly washer 38 to a radial outer side 132 of the assembly washer 38. The assembly washer 38 extends circumferentially about (e.g., completely around) the axis 26, providing the assembly washer 38 of FIG. 4 with a full-hoop (e.g., annular) geometry. The assembly washer 38 may be configured as a flat washer. With this arrangement, a washer bore 134 extends axially through the assembly washer 38 between the washer first end 126 and the washer second end 128. The washer thickness 124 of FIG. 4, for example, is uniform (e.g., constant, the same) as the assembly washer 38 extends radially out from its washer inner side 130 to its washer outer side 132.

Referring to FIG. 1, during installation of the mounting assembly 20, the assembly outer bushing 32 is mated with the tank mount aperture 42 to mount the assembly outer bushing 32 to the tank mount 28. The outer bushing base 64 of FIG. 1, for example, is inserted axially into the tank mount aperture 42, and the outer bushing rim 66 is axially engaged with (e.g., abutted against) the tank mount second side 50. Here, the outer bushing base 64 projects partially axially into the tank mount aperture 42 to its outer bushing first end 60, where the outer bushing first end 60 is (e.g., slightly) axially recessed from the tank mount first side 48. The assembly outer bushing 32 and its outer bushing base 64 may be fixed to the tank mount 28 through a radial interference fit; e.g., a press fit / a tight fit between the members 28 and 32. This fixed connection may prevent or significantly reduce axial and rotational movement between the assembly outer bushing 32 and the tank mount 28.

The assembly inner bushing 34 is mated with the inner bushing bore 68 to mount the assembly outer bushing 32 on the assembly inner bushing 34 and its inner bushing base 86. The inner bushing base 86 of FIG. 1, for example, is inserted axially into the outer bushing bore 68, and the inner bushing rim 88 is disposed axially next to (e.g., without another element axially in-between) and may or may not axially engage (e.g., contact) the tank mount 28 and its tank mount first side 48. Here, the inner bushing base 86 projects axially through the outer bushing bore 68, past the outer bushing second end 62, to its inner bushing second end 84. The assembly outer bushing 32 and its outer bushing second end 62 of FIG. 1 are thereby (e.g., slightly) axially recessed from the inner bushing second end 84. The assembly outer bushing 32 and its outer bushing first end 60 are also axially spaced from the inner bushing rim 88 by an annular gap; e.g., an air gap. Referring to FIG. 2, the inner bushing base 86 and its inner bushing base outer side 94 are disposed radially next to (e.g., without another element axially in-between) and radially engage (e.g., contact) the outer bushing base 64 and its outer bushing inner side 70. However, a radial outer diameter of the inner bushing base outer side 94 may be (e.g., slightly) smaller than a radial inner diameter of the outer bushing inner side 70 to form a loose fit interface between the inner bushing base 86 and the outer bushing base 64. The assembly outer bushing 32 may thereby be operable to (e.g., slightly) axially shift and/or rotate relative to the assembly inner bushing 34.

The assembly fastener 36 of FIG. 1 is mated with the case mount 30 and the assembly inner bushing 34. The fastener distal end 106, for example, is passed sequentially axially through the case mount aperture 44 and the inner bushing bore 90. The shoulder section 108 is thereby inserted sequentially into and through the case mount aperture 44 and the inner bushing bore 90 until, for example, the fastener head 102 axially engages (e.g., contacts) the case mount 30 and its case mount second side 56. Here, the assembly inner bushing 34 and its inner bushing second end 84 are axially next to and axially engage (e.g., contact) the case mount 30 and its case mount first side 54. A radial outer diameter of the shoulder section outer surface 114 may be (e.g., slightly) smaller than a radial outer diameter of the case mount aperture 44 to form a loose fit interface between the shoulder section 108 and the case mount 30. The radial outer diameter of the shoulder section outer surface 114 may also or alternatively be (e.g., slightly) smaller than a radial inner diameter of the inner bushing inner side 92 to form a loose fit interface between the shoulder section 108 and the assembly inner bushing 34. Thereby, prior to installation of the assembly nut 40, the assembly fastener 36 is operable to axially shift and/or rotate relative to the case mount 30 and/or the assembly inner bushing 34. However, in other embodiments, it is contemplated an interference fit may alternatively be provided between the shoulder section 108 and the case mount 30. An interference fit may still also or alternatively be provided between the shoulder section 108 and the assembly inner bushing 34.

The assembly washer 38 is mounted onto the assembly fastener 36 and its threaded section 110. The threaded section 110, for example, is inserted into and passed through the washer bore. The assembly nut 40 is subsequently threaded onto the threaded section 110 to axially clamp a stack of the members 38, 34 and 30 sequentially axially between the assembly nut 40 and the fastener head 102. Here, the assembly washer 38 is axially between, next to and engages (e.g., contacts) the assembly nut 40 and the assembly inner bushing 34 at its inner bushing first end 82. By contrast, the assembly washer 38 may be axially spaced from the shoulder section 108 and its shoulder section axial end 120 by an annular gap; e.g., an air gap. With this arrangement, the assembly fastener 36 is axially fixed to the case mount 30 and, thus, may prevent relative motion induce wear to the case mount 30 and the assembly fastener 36.

In the arrangement of FIG. 1, the case mount 30 is captured and clamped axially between the fastener head 102 and the inner bushing base 86. The tank mount 28 is captured axially between (a) the inner bushing rim 88 and (b) the outer bushing rim 66 and/or the case mount 30. Moreover, the tank mount 28 along with the assembly outer bushing 32 are captured axially between (a) the inner bushing rim 88 and (b) the case mount 30. However, since an axial clearance is provided for a combination of the tank mount 28 and the assembly outer bushing 32 between (a) the inner bushing rim 88 and (b) the case mount 30, slight rotation and/or axial movement of the tank mount 28 relative to the case mount 30 is possible. Provision of this slight rotation and/or axial movement reduces internal stresses and/or wear within the arrangement.

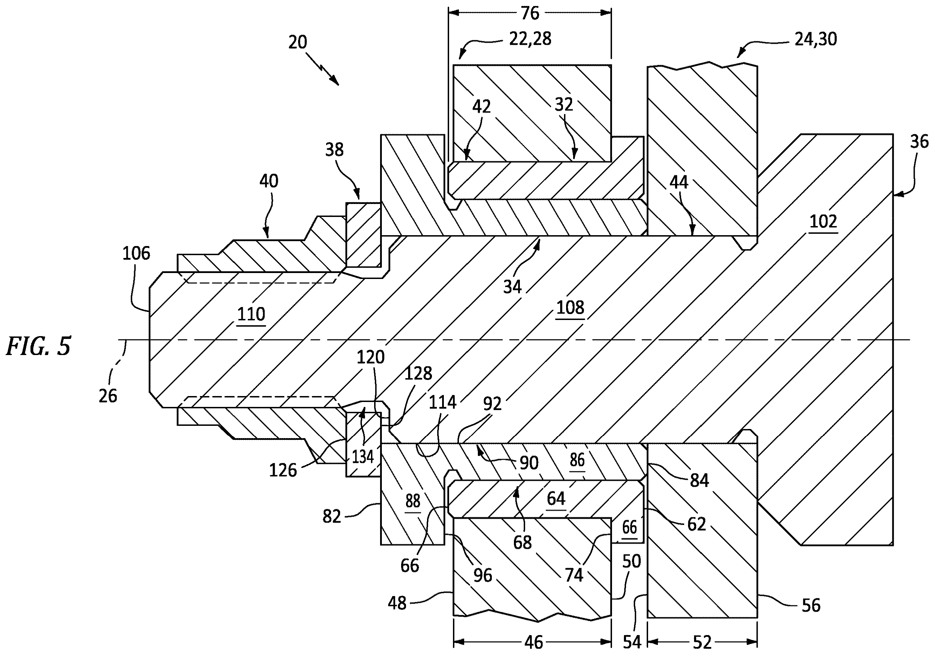

In some embodiments, referring to FIG. 5, it is contemplated the tank mount thickness 46 may alternatively be sized smaller than the axial distance 76. With such an arrangement, the assembly outer bushing 32 and its outer bushing base 64 (opposed to the tank mount 28) are operable to axially engage the inner bushing rim second end 96.

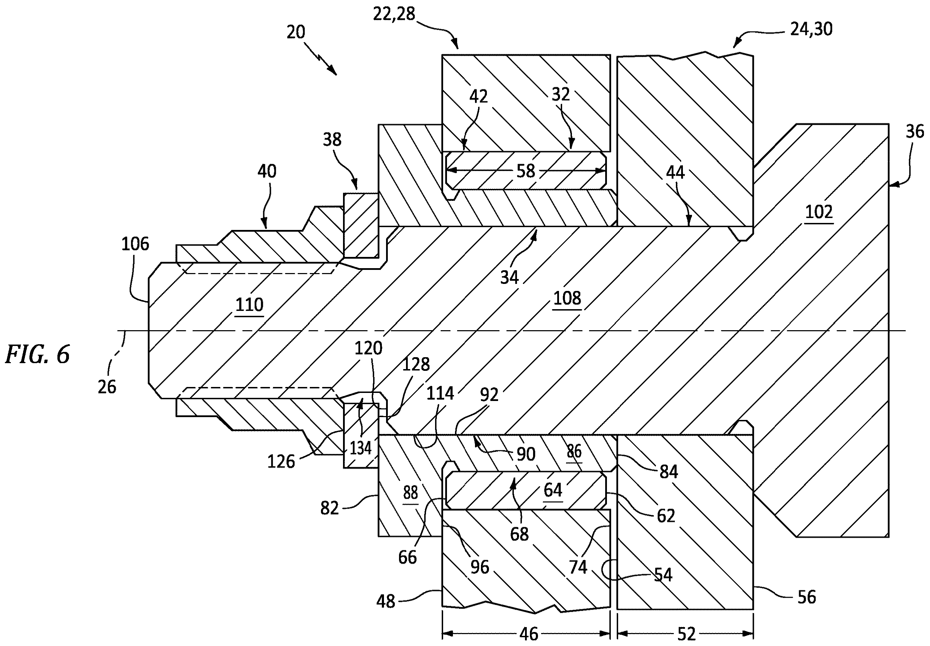

In some embodiments, referring to FIG. 6, it is contemplated the assembly outer bushing 32 may be configured without the outer bushing rim 66. With such an arrangement, the outer bushing thickness 58 may be sized smaller than the tank mount thickness 46. Here, the tank mount 28 (opposed to the assembly outer bushing 32) is operable to axially engage the case mount 30.

While FIG. 1 illustrates the case mount 30 between the fastener head 102 and the tank mount 28, the present disclosure is not limited to such an exemplary arrangement. It is contemplated, for example, arrangements of the case mount 30 and the tank mount 28 may be reversed. Moreover, while the assembly fastener 36 is described above as a shoulder bolt, it is contemplated the assembly fastener 36 may be configured as a non-shoulder bolt in other select embodiments.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft, comprising:
a first mount (28) comprising a first mount aperture (42);
a second mount (30) comprising a second mount aperture (44); and
a mounting assembly (20) connecting the first mount (28) to the second mount (30) along an axis (26) while providing controlled intercomponent movement between the first mount (28) and the second mount (30) to reduce internal stress and/or wear, the mounting assembly (20) including an outer bushing (32), an inner bushing (34) and a fastener (36);
the outer bushing (32) comprising an outer bushing bore (68), the outer bushing (32) projecting partially axially into the first mount aperture (42), and the outer bushing (32) radially next to the first mount (28);
the inner bushing (34) including an inner bushing bore (90), an inner bushing base (86) and an inner bushing rim (88) that projects radially out from the inner bushing base (86), the inner bushing base (86) projecting axially through the outer bushing bore (68) to axially engage the second mount (30), the inner bushing base (86) radially between and next to the fastener (36) and the outer bushing (32), and the inner bushing rim (88) axially next to the first mount (28) with the first mount (28) axially between the inner bushing rim (88) and the second mount (30);
the fastener (36) projecting axially through the second mount aperture (44) and the inner bushing bore (90); and
a fluid reservoir structure, the fluid reservoir structure comprising one of the first mount (28) or the second mount (30).

2. The assembly of claim 1, wherein the second mount (30) is axially between and contacts the inner bushing base (86) and a head (102) of the fastener (36).

3. The assembly of claim 1 or 2, wherein the second mount (30) is clamped axially between the inner bushing base (86) and a head (102) of the fastener (36).

4. The assembly of claim 1, 2 or 3, wherein:
the outer bushing (34) further comprises an outer bushing base (64) and an outer bushing rim (66) that projects radially out from the outer bushing base (64);
the outer bushing base (64) projects partially axially into the first mount aperture (42) towards the inner bushing rim (88); and
the outer bushing rim (66) is axially next to the first mount (28) and the second mount (30).

5. The assembly of claim 4, wherein the outer bushing rim (66) contacts the first mount (28) and is axially spaced from the second mount (30).

6. The assembly of claim 4 or 5, wherein the outer bushing base (64) is fixed to the first mount (28) through a radial interference fit.

7. The assembly of claim 6, wherein a loose fit interface is formed radially between the inner bushing base (86) and the outer bushing base (64).

8. The assembly of any preceding claim, wherein the fastener (36) includes:
a head (102); and
a shank (104) projecting axially out from the head (102) and sequentially through the second mount aperture (44) and the inner bushing bore (90).

9. The assembly of claim 8, wherein the shank (104) is radially next to the second mount (30).

10. The assembly of claim 8 or 9, wherein:
the shank (104) includes a threaded section (110) and a shoulder section (108) projecting axially through the second mount aperture (44) and the inner bushing bore (90) from the head (102) to the threaded section (110); and
the mounting assembly (20) further includes a nut (40) threaded onto the threaded section (110) with the inner bushing (34) clamped axially between the nut (40) and the first mount (28).

11. The assembly of claim 10, wherein the mounting assembly (20) further includes a washer (38) clamped axially between the nut (40) and the inner bushing (34),
wherein, optionally:
the washer (38) is axially spaced from an axial end (120) of the shoulder section (108) by an air gap; and/or
the washer (38) has a uniform axial thickness extending radially from an inner side (130) of the washer (38) to an outer side (132) of the washer (38).

12. The assembly of any preceding claim, further comprising a housing structure for an aircraft engine, the housing structure comprising the other one of the first mount (28) or the second mount (30).

13. An aircraft assembly for providing controlled intercomponent movement to reduce internal stress and/or wear, comprising:
a first mount (28) comprising a first mount aperture (42) that extends axially along an axis (26) through the first mount (28);
a second mount (30) comprising a second mount aperture (44) that extends axially along the axis (26) through the second mount (30);
an outer bushing (32) comprising an outer bushing bore (68), the outer bushing (32) pressed into the first mount aperture (42);
an inner bushing (34) including an inner bushing bore (90), an inner bushing base (86) and an inner bushing rim (88) that projects radially out from the inner bushing base (86), the inner bushing base (86) projecting axially along the axis (26) through the outer bushing bore (68), and the inner bushing rim (88) axially next to the first mount (28) with the first mount (28) axially between the inner bushing rim (88) and the second mount (30);
a fastener (36) including a head (102) and a shank (104) projecting axially along the axis (26) out from the head (102) and sequentially through the second mount aperture (44) and the inner bushing bore (90) to a distal end of the fastener (36);
a washer (38) mounted on the shank (104); and
a nut (40) threaded onto the shank (104) to clamp the washer (38), the inner bushing (34) and the second mount (30) in a stack between the nut (40) and the head (102),
wherein, optionally, the assembly further comprises:
a fluid reservoir structure comprising the first mount (28); and/or
a housing structure for an aircraft engine, the housing structure comprising the second mount (30).

14. The aircraft assembly of claim 13, wherein:
the inner bushing (34) extends axially along the axis (26) from an inner bushing first end (82) to an inner bushing second end (84), the inner bushing rim (88) is located at the inner bushing first end (82), and an axial distance (98) from the inner bushing rim (88) to the inner bushing second end (84) is larger than an axial thickness (58) of the outer bushing (32); and/or
the shank (104) includes a threaded section (110) and a shoulder section (108) connected axially between the threaded section (110) and the head (102), the second mount (30) and the inner bushing (34) are mounted on the shoulder section (108), the nut (40) is threaded onto the threaded section (110), and an axial length (112) of the shoulder section (108) is smaller than a sum of an axial thickness (52) of the second mount (30) and an axial thickness (80) of the inner bushing (34).

15. An aircraft assembly for providing controlled intercomponent movement to reduce internal stress and/or wear, comprising:
a shoulder bolt (36) including a head (102), a threaded section (110) and a shoulder section (108) extending axially along an axis (26) from the head (102) to the threaded section (110);
an inner bushing (34) including an inner bushing base (86) and an inner bushing rim (88) that projects radially out from the inner bushing base (86), the inner bushing base (86) mounted on the shoulder section (108), the inner bushing base (86) extending axially along the axis (26) from an inner bushing first end (82) to an inner bushing second end (84), the inner bushing second end (84) located closer axially to the head (102) than the inner bushing first end (82), and the inner bushing rim (88) disposed at the inner bushing first end (82);
an outer bushing (32) including an outer bushing base (64) and an outer bushing rim (66) that projects radially out from the outer bushing base (64), the outer bushing base (64) mounted on the inner bushing base (86), the outer bushing base (64) extending axially along the axis (26) from an outer bushing first end (60) to an outer bushing second end (62), the outer bushing first end (60) located closer axially to the inner bushing rim (88) than the outer bushing second end (62), the outer bushing second end (62) axially recessed along the inner bushing base (86) from the inner bushing second end (84), and the outer bushing rim (66) disposed at the outer bushing second end (62);
a nut (40) threaded on the threaded section (110); and
a washer (38) mounted on the shoulder bolt (36), the washer (38) axially between and contacting the nut (40) and the inner bushing (34).
